(19) Europäisches Patentamt

European Patent Office

Office européen des brevets

(11) EP 0 844 574 A2

## (12) EUROPEAN PATENT APPLICATION

(43) Date of publication:
27.05.1998 Bulletin 1998/22

(51) Int Cl.⁶: G06F 17/30, G10L 5/00

(21) Application number: 97830594.4

(22) Date of filing: 13.11.1997

| | |
|---|---|
| (84) Designated Contracting States:<br>**AT BE CH DE DK ES FI FR GB GR IE IT LI LU MC NL PT SE**<br>Designated Extension States:<br>**AL LT LV MK RO SI**<br><br>(30) Priority: **21.11.1996 IT RM960796**<br><br>(71) Applicant: **Cirte Manifatturiera S.p.A.**<br>**84135 Salerno (IT)** | (72) Inventor: **Cataldo, Adamo**<br>**Salza Irpina (Avellino) (IT)**<br><br>(74) Representative:<br>**Fiammenghi-Domenighetti, Delfina et al**<br>**Fiammenghi-Fiammenghi**<br>**Via Quattro Fontane 31**<br>**00184 Roma (IT)** |

(54) **A method of data search by vocal recognition of alphabetic type requests**

(57)    A method of data search in a system for the automatic processing of information, using the vocal recognition of alphabetic type requests, provides for the preliminary identification of a set of candidate records which are ordered for each required field, according to the application of an algorithm for the management of the uncertainty in the search, which is of a probabilistic type. A certain number of record candidates is therefore chosen, with the best probabilities, for a cross search on the same database. A device is described, which carries out the method.

FIG. 1

## Description

The invention generally relates to automatic recording and search methods for information contained in a EDP (data processing) file, and more particularly it is concerned with a data search method in systems for the automatic processing of information, using phonetic vocal recognition of alphabetic requests, based on algorithms of a statistical kind.

It is important to say beforehand that there is a difference between voice "recognition" and voice "comprehension". To recognize a word (or a syllable, or a phoneme, or a sentence) means to associate a "label" to a vocal signal segment based upon a preceding classification. The comprehension process starts from said labels in order to arrive at a formal representation of the sentence meaning.

Even if we limit ourselves to the recognition only, the main obstacle for the realization of a voice (speech) recognition system, is due to the extreme variability of the vocal signal.

A person is able to recognize the speech of different individuals with different accents, also in presence of disturbance signals, moreover he/she can recognize a word both when it is uttered separately and when there is just a hint of it inside the context of a sentence. A recognition system is not suited, in general, to identify signals which are so different from each other, and to decompose into single words a fluent speech. It is therefore possible to state that the problem of speech recognition has not been solved at all in its generality.

The causes of the variability of the vocal signal are usually subdivided into production factors, as the speaker, the message itself, and post-production factors, that is the communication channel.

The expression "dependence from the speaker" means that the repetition of a message by the same person or by different persons, results in the production of two different acoustical signals. Obviously these differences will be small in case of a repetition by the same speaker, and considerably greater when the message is repeated by a different speaker.

The expression "dependence from the message" indicates the causes of variability of a linguistic, or more precisely, contextual type. The acoustic signal related to a word, or even more remarkably, the acoustic signal related to a syllable or a phoneme, will be very different when the word is uttered individually, that is separately in a silent context, or when the word is "immersed" in the context of a sentence or a speech.

The expression "dependence from the channel" means the alteration of the vocal signal during the passage from the speaker to the hearer, which alteration is due to the simultaneous presence of the environmental noise (noise due to other sources and/or reflections of the room in which the emission takes place, and to alterations intrinsically related to the transmission means, as for instance the telephone connection).

There are various approaches for solving the problem of speech recognition, but they may all be included in the four typologies listed below.

A first approach, which is the one used nowadays in commercial recognition systems, is based on the extraction of some typical signal parameters and on the comparison with a certain number of masks recorded during the learning phase. This approach to the problem, defined as global type approach, has however a number of drawbacks: in fact, it requires storage of one or more masks for every word to be recognized and it requires comparison of all masks with the input signal.

Another approach to the problem is the "phonetic" or "segmental" approach: the purpose of this method is the recognition of the phoneme, that is of the minimum element which enters in the composition of the composed language. Through this recognition it will be possible to reconstruct the single words and from these the speech, thereby approaching the ultimate object of the recognition of a conversation. Phonemes possess a high variance degree in their acoustic realizations, said variance being related essentially to their contextual variations, and therefore the recognition will be considerably complex.

Another method for vocal recognition is one employing statistical Markov models. Following this approach, the whole communication channel is decomposed into two distinct models, one being the acoustic channel model, which takes into account the variations of the acoustic signal related to the single phonemes, the other one being the language model, which takes into account the variations of the text. Finally, a last approach to the problem of vocal recognition is the one based on neuronal networks. The neuronal approach tries to develop a mathematical model of the perception mechanisms.

The object of the present invention is to provide a rapid and efficient method of data search in systems for the automatic processing of information by means of vocal recognition of alphabetic type requests, which is based on statistical selection principles and which, being a synthesis of the most favourable aspects of the above mentioned different methods, can duly take account of the phonetic reliability, the mixing-up classes and language type information regarding the data search system to be implemented.

A further object of the present invention is to provide a data search method in systems for the automatic processing of information, by means of vocal recognition of alphabetic type requests, said method being effectively free of the effect of disturbing events affecting the voice recognition and the data retrieval efficiency.

A last object of the present invention is to provide an apparatus which carries out a method of data search in systems for the automatic processing of information by means of vocal recognition of the alphabetic type requests, said apparatus having a modular architecture so as to easily adapt itself to different applicative cases;

moreover, the architecture should be of the "open" system type, in order to integrate also other functions which could be made available by the technology in the future. More generally, the invention aims at using standard telematic technologies and procedures so as to obtain a device which has a reduced cost and easy maintenance. These advantages as well as other ones, which will be clarified in the description, are attained using a method in which to search data in systems for the automatic processing of information, by vocal recognition of alphabetic type requests, after the acquisition of the alphabetic type requests, a recognition system extracts a set of possible alternatives from a database of D unique records and said alternatives of candidate records are ordered for each required field according to an algorithm which handles the uncertainty during the search; wherein, if $n_1, n_2, ... n_M$ is the number of unique extentions associated to the record type with M fields forming the database, and if $w_1, w_2, ... w_M$ is the number of unique extentions associated to this type of record with M fields in the n-best list, so that the total number of possible records is given by the product

$$N = n_1 \times n_2 \times ... \times n_M$$

and the total number of records which may be formed from all combinations available in the n-best list is

$$W = w_1 \times w_2 \times ... \times w_M,$$

said algorithm evaluates the probability P that no element of D is found in W, in the form of:

- the ratio between the total number of records not in W, and the total number of records that is

$$P = \frac{(N-W)}{N}$$

  if the database contains only one record,
- the probability that the first record is not in W times the probability that the second record is not in W, that is

$$P = \frac{N-W}{N} \times \frac{N-1-W}{N-1}$$

  if the database contains two records;
  wherein in the second therm of the expression, the total number of records which may be equal to the second record of the database is reduced by one, since after the check for the preceding record of the database it is known that this record must be ignored in the following search, due to the fact that the records in the database are unique,
- the probability product that every record is not in W,

that is

$$P = \frac{N-W}{N} \times \frac{N-1-W}{(N-1)} \times ... \frac{N-(D-1)-W}{N-(D-1)}$$

in the general case, in which there are D records in the database and $D + W \leq N$.

According to this method a predetermined number of candidate records with the best probabilities is therefore chosen for a subsequent cross search on the same database, wherein these searches generate all possible combinations among which only those are selected which are effectively present in the database.

A preferred embodiment of the invention will be described in the following only for illustrative purposes without limiting thereby the generality and the possible applications of the invention itself, the description being made with reference to the annexed figure which shows a block diagram of the different functional units forming the apparatus of the present invention.

In said figure it is possible to distinguish the various functional blocks specified in the following. The voice recognition system 1 effects the recognition of the speech, for instance a telephonic speech, independently of the individual, using a phoneme recognition process based on statistical type identification methods. The recognition quality is further increased by the use of active vocabularies, which are provided by the dialogue management system, which makes use of the previsions depending on the context of the conversation.

The dialogue managing system 2 effects the main control on the system by keeping a controlled dialogue (defined in order to attain the object) also through requests of confirmation or clarification for the purpose of eliminating any doubt. The dialogue styles may vary; they depend on the specific interaction between the user and the computer, and they allow a rapid dialogue in case of skilled users. In case the requests cannot be fulfilled, the system cordially takes leave of the user, transferring the call to the operator and communicating to him the "history" of the dialogue which has taken place up to that moment.

The database access module 4 ensures a rapid access to the database 5 and allows to perform a search on any field which forms the record.

The search is done by using specific information, moreover it is possible to effect requests also by making use of "wildcard" or alternative characters. The possible identified records are classified according to the number of fields which have fulfilled the search parameters, and are ordered according to this classification. This ensures that the dialogue management system has at its disposal the maximum amount of possible information in order to decide which dialogue to start for the purpose of successfully completing the request of information, as will be illustrated in more detail in the following in the description of the uncertainty control during the search in the database.

The vocal synthesizer 3 is suited to generate words dynamically, that is in real time, starting from the phonemes.

The database management system 6 provides for the possibility of updating the database without requiring a successive training. This management is an additional activity besides the principal one consisting in the request of information from the telephone database and it has been specifically designed to update the information of the database and for the generation of new data for the system (for instance the updating of the pronunciations 7). According to an immediate application, for instance the service of telephone number request from the subscriber telephone directory, the user dials the telephone number to which the system is connected, through a telephone connected to the change-over telephone network. After a presentation message, the system asks the user to tell some information like the city number, and afterwards its surname.

The recognition system extracts from the database a set of alternatives. The candidates identified for any requested field are ordered according to the probability of correct recognition; said probabilities are the result of algorithms which take into consideration the phonetic reliability, the mixing-up classes, and the linguistic information. These algorithms have been designed on a theoretical basis and enriched on a heuristic basis, and finally rendered optimal by using adaptive learning techniques.

In particular, if we assume that $n_1$, $n_2$, $n_3$, $n_4$, $n_5$, are the numbers of unique names of cities, surnames, christian names, names of streets and mailing address numbers, respectively, and if we assume further that $w_1$, $w_2$, $w_3$, $w_4$, $w_5$ are the numbers of unique names of cities, surnames, christian names, street names and mailing address numbers respectively, which are found in the list of the n best ones, the total number of possible records (complete addresses) is:

$$N = n_1 \times n_2 \times n_3 \times n_4 \times n_5$$

and the total number of records which can be produced by the whole number of combinations available in the list of the n best ones is:

$$W = w_1 \times w_2 \times w_3 \times w_4 \times w_5$$

Therefore, if we have a database containing D unique records, if we set:
P= probability that no element of D is found in W, and if the database contains a single record, the probability that that record is not in the set W is given by:

$$\frac{\text{total number of records not in W}}{\text{total number of records}} = \frac{N - W}{N}$$

If the database contains two records, the probability that neither of them is in the set W is given by: the probability that the first record is not in W times the probability that the second record is not in W, that is:

$$\frac{N - W}{N} \times \frac{N - 1 - W}{N - 1}$$

It is to be noted that in the second term of the expression the total number of records that can be equal to the second record of the database is reduced by one; the reason is that after the check for the first record of the database, we know that first record must be ignored in the following search (since the records of the database are unique). Therefore, in the general case where there are D records in the database, the value of P is calculated as follows:

$$P = \frac{N - W}{N} \times \frac{N - 1 - W}{N - 1} \times \dots \times \frac{N - (D - 1) - W}{N - (D - 1)}$$

wherein $D + W \leq N$.

In a base example a database has been considered which was formed by one thousand records with lists of 30 cities, 50 christian names, 150 surnames, 120 street numbers and 10 mailing address numbers. Supposing the number of unique records contained in the list of the n best ones is 10 in all cases, with the exception of the mailing address number, in which case we suppose it to be equal to 1, the probability that no element of the database contains, in each of its five fields, an element present in the respective n-best list $w_n$ is 0.9636.

This means simply that it is most unlikely that a randomly generated record in the described circumstances corresponds to a record which is really present in the database. This probability is in fact equal to the probability of a random correspondence = 1 - 0.9636 = 0.0364

The recognition system is sufficiently powerful to recognize, on the average, 60 percent of the original phonemes. This means, that in an n-best list of sufficient length (empirically set for the moment to be equal to 20), the probability that the original word is in the list is very high (in about 70 percent of the cases the original word is in every one of the five lists which contribute to the five fields of the database). On the other hand, for a given length of the lists w, it is clear that many other combinations will be recognized (W). It will therefore be necessary to make sure that these combinations, in the overwhelming majority of the cases, cannot be found randomly in the original database. The probability P ensures the validity of these premises.

The probabilistic study has therefore been done by evaluating the changes when the number of the various data in the database is increased. For the cases which have been considered the database size has been fixed at 10000 records, which gives a value for the probability of complete random correspondence of 1 - 0.6905 = 0.3095. This value is rather high, but, naturally, it is unlike that this increase in the size of the database takes place without a corresponding increase of the initial data. Concerning the effect of a corresponding increase in the initial data, the calculations show that, by increasing the size of the database by a factor of 10, and by increasing the number of christian names and surnames by a factor of 10 each, the probability for complete random correspondence decreases from 0.3095 to a value of 0.0037; by increasing the number of the cities ($n_1$) from 30 to 100, a reduction of complete random correspondence probability from 0.3095 to 0.1052 is obtained; by further increasing $n_1$ to a value of 1000, there results a reduction to 0.0110; and when $n_2$ reaches a value of 100000, the probability for complete random correspondence is only 0.0001.

Summarizing what has been said above, a number $N_C$ of candidates with the best probabilities are chosen by the system for the subsequent step of cross searching in the database, and even by considerably increasing the scale of the system, $N_C$ anyway remains a value of the same order. At this time, the sets of candidates (cities and surnames), each having a maximum size equal to $N_C$ are used to "generate" all possible combinations, from which only those present in the database are selected. Afterwards, the system requires particular information (the christian name or the street), according to what is considered more useful.

Global candidates (that is those present in the database) inherit the combined probabilities of the constituent fields. It must be noted that the absence of a field does not invalidate the search of the global candidate, but determines only a probabilistic penalization. In this manner, the system is able to operate also in case of traumatic events (for instance line noise, a user cough, etc.).

During each information introduced by the user the number of possible records is restricted, until it possibly reaches a restricted number of global candidates (from 1 to 6), whose probability are at least 85% better than for the remainder. These candidates are proposed to the user for a confirmation (by supplying to him the necessary data for eliminating possible final ambiguities, which may vary for the whole record with the confirmation of a single field) before the reading of the corresponding information which is sought after. However, it is not certain that the system will always arrive at a restricted set of candidates, in this case the call is transferred to a possible operator. It must be stressed that with this approach the user is required to reply to only one confirmation step during the whole session.

In a more detailed analysis of the functions of the different blocks constituting the recognition system, the following steps must be distinguished.

A) Voice recognition system

The voice recognition function processes - independently of the speaker - dialogues which are kept continuosly , and generates a predetermined number of words or sentences which will coincide with the phonemes which have been recognized. The user, at the input of the voice recognition system 1, effects a telephonic conversation uttering both isolated and consecutive words; in the conversation pauses may be present. Moreover, data from the dictionary of pronunciations 7 are transferred to the voice recognition system 1 in the form of words and phoneme transcriptions. Always at the input of the voice recognition system there is provided control information from the dialogue control system of 2 (for instance the specification of the active vocabulary).

The very processing function of the voice recognition system, provides for the conversion of the input speech into one or more words, and that continuos silence be represented by a null value. The output to the dialogue control system 2 will contain the list of the best words and/or sentences which have been recognized and an associated score or possibly a null value.

B) Dialogue (control) system (SGD)

The dialogue control system 2 decides about the style and the content of the dialogue between the user and the computer. It provides active vocabularies in order to increase the accuracy of the voice recognition by reducing the searching space, and further it controls the access to the database 5 and the speech generation functions , through the sections related to the language processor 2a, the decisions actuator 2b, and the text generator 2c.

I - Input to the dialogue control system (SGD)

- A data item as for instance the telephone number corresponding to the request of information contained in the archive (system initialization).
- A null value from the voice recognition system, representing the absence of a dialog.
  The best words/sentences from the voice recognition system.
- The text or information found by the access system to the database 4.
- A null value from the access system to the database 4, representing an unsuccessful search.

II - Processing inside the SGD

When the user addresses the system, the SGD 2 generates a dialog opening message which comprises menu options related to the required kind of information. At the end of a dialog which ended successfully, the system asks the user if he wants to make a new searching. In the affirmative case, the processing cycle starts again. Otherwise a "farewell" or output end message is forwarded.

II.1 - Interaction between the SGD 2 and the Voice Recognition System 1

The SGD controls the dialog between the man and the computer, for instance by starting the voice recognition system when the "turn" of the user comes and stopping it when the system must reply.

The SGD 2, when it is waiting for a dialog from the user, sends control information (for instance an active vocabulary) to the voice recognition system 1. The vocabulary depends on the nature of the expected dialogue; for instance a clarification of the already received information, options associated to a menu, requirements for specific information, etc.

If the voice recognition system receives a null value, a dialog will be started, for information request;

- if the information is subsequently received, the normal processing will begin;
- otherwise, the call will be terminated after a predetermined number of dialog "beats".

After the best words/sentences have been sent by the voice recognition system, their analysis is started;

- if they are of no importance in the system, a dialog for request of further information is started;
- if relevant information is received, the normal processing is started;
- otherwise the system interrupts any kind of dialog and the telephone call is transferred to the operator (after a predetermined number of dialog "beats" or a predetermined time interval);
- if the received information is not sufficient to perform a correct searching, a dialog is started in order to ask for further information;
- if sufficient information is received, normal processing is started;
- otherwise the system evaluates the received data, by processing the null values and the irrelevant information, as described previously, or transferring the telephone call to the operator after a predetermined number of "beats", together with the history of the dialog up to that moment;
- if sufficient information is received, it will be associated to the fields which constitute the request and sent to the database access system.

II.2 - Interaction of the dialogue control system SGD 2 with the database access module 4.

If a null value is received from the database access module, a dialog with the user is started in order to obtain further information:

- if a predetermined number of null values is obtained, then the telephone call will be transferred to the operator together with the "history" of the dialog.

If a single value is received as answer to the specific information required, then this information - supplemented with necessary information for the answer format - is sent to the voice synthesizer 3.

If a number of possible values are received as answer to the information required, then a dialog with the user is started in order to further define the information, sending the necessary control information to the voice recognition system;

- if after this further dialog there still exist different possible values, then the telephone call will be transferred to the operator.

III. Outputs from the SGD 2

- Text sent to the voice synthesizer 3.
- Partially filled text schemes, containing information on the search fields, sent to the database access module.
- Control information (e.g. active vocabulary) sent to the voice recognition system.
- Connection with the operator and sending of the dialog history.
- Telephone call end signal.

C) Database access 4

The database access module performs a scanning of selected fields inside the database and identifies the records containing information coinciding with the specified information.

The partially filled schemes each containing a field combination and originating from the dialog control system 2, are supplied to the input of this module.

The processing in the database access system 4 provides for a search on the relevant key fields of the database in order to identify the required information.

The case related to an unsuccessful search is represented by a null value.

At the output, towards the dialog control system 2, there are supplied the identified records which have been ordered according to their probabilistic recognition degree and which contain the information related to each specific field together with the corresponding score derived from the number of fields containing information coinciding with the specified one; otherwise a null value is supplied, meaning that no record has been found.

D) Voice synthesizer 3

The voice synthesis function 3 generates the words dynamically from the text. The input text originating from the dialog control system 2 is converted into a speech in the very processing step, using dynamic voice generation. At the output to the user, the relative voice synthesis is therefore supplied.

E) Database management system 6

The database 5 and pronunciation dictionary 7 control function is arranged so that a new information may be added to the DP database and/or a new phonetic code may be added to the pronunciation dictionary. Therefore, the result of this step will be an updated database 5 as well as an updated pronunciation dictionary 7.

This system, realized according to a specific application, allows partial automation of the information service related to the telephone directory , by using the voice recognition technology.

The product has been realized according to a particular embodiment, by using an architecture based on two personal computers connected in a LAN network (local area network), wherein to the first of them there is assigned the task of interfacing the system and the telephone line and of converting text strings into voice, while the second is used for the voice recognition process.

The system realized in this way effects the integration of the functions of the telephone system and the data environment enhancing their performances. This integration belongs to a branch of telematics which is named CIT (Computer Integrated Telephony) which has the object of providing a standard base in order to efficiently realize a plurality of services with highly increased value. The adoption of a CIT platform allows the system of the present invention to pave the way for a predictable and desirable growth, both functional and qualitative. The whole structure of the system is made up of special modules provided for specific functions or of groups thereof.

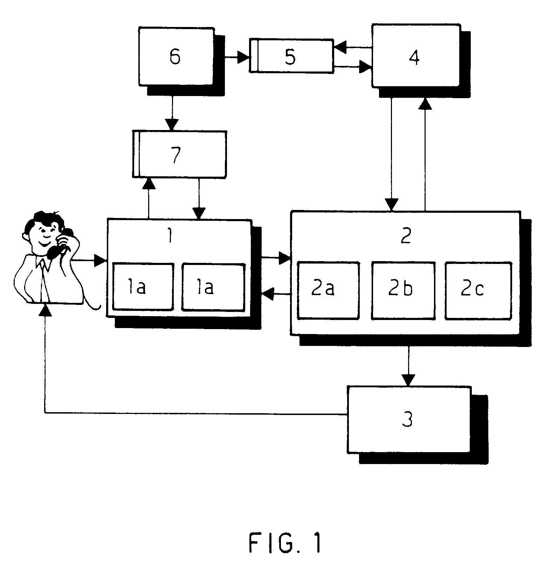

**Claims**

1. A method of data search in systems for the automatic processing of information, by vocal recognition of alphabetic type requests, which is characterized in that after the acquisition of the alphabetic type requests, a recognition system extracts a set of possible alternatives from a database of D unique records and said alternatives of candidate records are ordered for each required field according to an algorithm which handles the uncertainty during the search; wherein, if $n_1$, $n_2$, ..., $n_M$ is the number of unique extensions associated to the record type with M fields forming the database, and if $w_1$, $w_2$, ..., $w_M$ is the number of unique extensions associated to this type of record with M fields in the n-best list, so that the total number of possible records is given by the product

$$N = n_1 \times n_2 \times ... n_M$$

and the total number of records which may be formed from all combinations available in the n-best list is:

$$W = w_1 \times w_2 \times ... w_M,$$

said algorithm evaluates the probability P that no element of D is found in W, in the form of:

- the ratio between the total number of records not in W, and the total number of records, that is:

$$P = \frac{(N-W)}{N}$$

if the database contains only one record,
- the probability that the first record is not in W times the probability that the second record is not in W, that is

$$P = \frac{(N-W)}{N} \times \frac{(N-1-W)}{(N - 1)}$$

if the database contains two records;
wherein in the second term of the expression, the total number of records which may be equal to the second record of the database is reduced by one, since after the check for the preceding record of the database it is known that this record must be ignored in the following search, due to the fact that the records in the database are unique,
- the probability product that every record is not in W, that is

$$P = \frac{(N - W)}{N} \times \frac{(N - 1 - W)}{(N - 1)} \times ... \times \frac{(N - (D-1) - W)}{(N - (D-1))}$$

in the general case, in which there are D records in the database and $D + W \leq N$;
a predetermined number of candidate records with the best probabilities being thereby chosen in order to perform a cross search in said database; from said search being generated all possible combinations, wherefrom only those are selected which are effectively present in the database.

2. A method of data search in systems for the automatic processing of information by vocal recognition of alphabetic type requests according to claim 1,
characterized in that when the size D of the database increases, the percentage of the number of candidate records with the best probabilities, always remains of the same order of magnitude with respect to the size of the database.

3. A method of data search in systems for the automatic processing of information, by means of vocal recognition of alphabetic type requests, according to claim 1, characterized in that, if necessary, information concerning specific fields of the record to be sought after, may be requested interactively, in order to arrive at the determination of said record by progressively restricting the set of the possible records.

4. A method of data search in systems for the automatic processing of information by means of vocal recognition of alphabetic type requests according to claim 3, characterized in that, because of the fact that the global candidates inherit the combined probabilities of the constituent fields, the non-acquisition of the information concerning a field of the record being sought after, allows in any case the global searching and causes only a probabilistic penalization.

5. Device for carrying out the method of data search in systems for the automatic processing of information by means of vocal recognition of alphabetic type requests according to the preceding claims, characterized in that it comprises:

   - a voice recognition module (1) which includes a phoneme recognition system (1a) and a word recognition system (1b);
   - a dialogue management system (2) comprising a language computer (2a), a decision actuator (2b) and a text generator (2c);
   - a voice synthesizer (3);
   - a database access module (4);
   - a database (5);
   - a database management system (6); and
   - a pronunciation dictionary (7).

6. A device for carrying out the method of data search in systems for automatic management of information by means of vocal recognition of alphabetic type requests according to claim 5, characterized in that the voice recognition module (1) effects the recognition of the speech independently from the individual, using a phoneme recognition process which is based on statistical determination procedures, the recognition quality being further increased through the use of active dictionaries which are supplied by the dialogue control system (2) on the basis of the predictions depending on the conversation context.

7. A device carrying out the method for data search in systems for the automatic processing of information by means of vocal recognition of alphabetic type requests according to claim 5, characterized in that the dialogue control module (2) effects the base control on the system, by keeping intelligent and interactive dialogs through confirmation and clarification requests.

8. A device carrying out the method of data search in a system for the automatic processing of information by means of vocal recognition of alphabetic type requests according to claim 5, characterized in that the search is performed by taking into account the "placings" of the most probable records according to the number of fields which have satisfied the search parameters, thereby ensuring that the dialog control system has the maximum possible information available in order to decide which dialog to start, so as to successfully complete the information request.

9. A device carrying out the method of data serach in systems for the automatic processing of information by means of vocal recognition of alphabetic type request according to claim 5, characterized in that the database management module (6) operates on the database without requiring a successive training, by performing the updating of the information contained in the database (5) and generating the new data for the system.

FIG. 1